# EUROPEAN PATENT SPECIFICATION

(11) **EP 0 754 596 B1**
(45) Date of publication and mention of the grant of the patent: **12.04.2000**
(21) Application number: 96305294.9
(22) Date of filing: 19.07.1996
(51) Int. Cl.: B60R 13/04, B60J 10/00, F16B 2/20

(54) **Attachable elongate strip**
Aufsetzbarer Streifen
Bande attachable

(30) Priority: 21.07.1995 GB 9515097
(43) Date of publication of application: 22.01.1997
(73) Proprietor: Standard Products Limited, Huntingdon Cambridgeshire PE18 6NU (GB)
(72) Inventor: Harris, David Strachan, Orton Wistow, Peterborough PE2 6YT (GB)
(74) Representative: Jones, Michael Raymond

(56) References cited:
- WO-A-85/00132
- DE-A- 2 506 680
- DE-B- 1 076 350
- DE-U- 9 317 172
- FR-A- 1 505 136
- FR-A- 2 499 643
- US-A- 4 071 930

## Description

This invention relates to an elongate strip intended for attachment to a flange. The present invention is particularly, but not exclusively, directed to strips intended to be applied to motor vehicles, which strips may serve as window glass run channels, door seals, waist seals, boot seals, bonnet seals, flange finishers or trim finishers. Normally such elongate strips are applied to a flange, which can be a single or double flange, by a technique which involves pushing, pulling, rolling, hammering or bruising the relevant type of elongate strip on to its respective flange, but such a technique can damage the elongate strip.

In order to enhance the gripping of the flange by the elongate strip, opposing side walls of the strip, which are to embrace opposite sides of the flange, can be provided with reinforcement, which can take the form of a reinforcing core which is generally U-shaped in cross-section and which is present in all three of (i) one opposing side wall, (ii) the other opposing side wall, and (iii) a base region which links to the two opposing side walls.

In addition, the opposing side walls can be provided with a variety of projections extending into the channel partially defined by the opposing side walls, which projections are intended to increase the resistance to removal of the elongate strip from the flange.

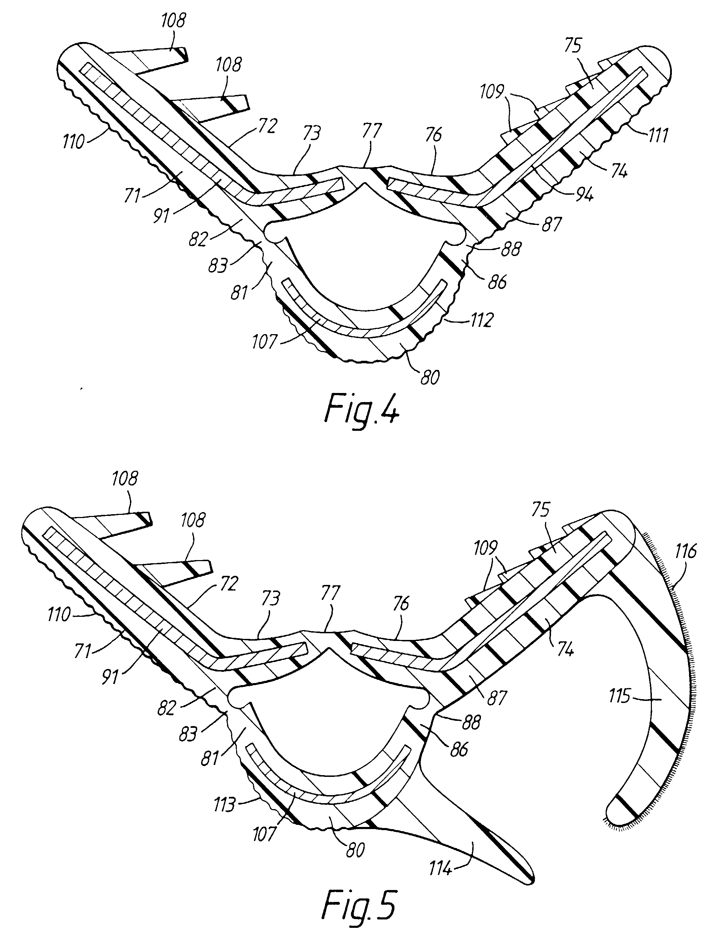

DE-B-1076350 discloses a rubber strip which has a natural rest position (as shown in Figure 4) by the insertion of a splayed-apart core (as shown in Figure 5). It is only when the combination of strip 1 and core 2 is squeezed together that the resulting product has a clamping effect. There is no ready facility for the product in the "closed" configuration to move to the "open" configuration through an "over centre" intermediate position.

US-A-4071930 discloses a clip having the ability to "flip" between open and closed configurations, but the construction shown cannot be made by extrusion and is inappropriate to the production of long strips suitable for use in the automobile industry.

According to the present invention, there is provided an elongate strip formed by extrusion and intended for attachment to a flange present in a motor vehicle, the strip having a channel formed by a base and two opposing side walls, the strip being deformable between a first configuration in which the side walls are splayed apart and a second configuration in which the side walls are relatively close to each other, energy being required to effect deformation of the strip out of its first configuration or second configuration, with energy thus being required to effect deformation of the strip from the first to the second configuration and vice versa, with the strip having stability when at rest in either of the first and second configurations (Elongated strip of the type disclosed in DE-B- 1 076 350);
characterised in that the elongate strip includes an elastically resilient component which, when the strip is at rest in its first or second configuration, has relatively low potential energy but which, when the strip is forced out of its first or second configuration, has a relatively high potential energy, as defined in the characterising portion of claim 1. It can thus be appreciated that the elongate strip can "flip" from its first configuration to its second configuration, and vice versa, with energy being required to cause the "flip" to occur, such energy being needed to increase the potential energy of the elastically resilient component during the first stages of deformation until an unstable condition is reached, with the result that, once the system is "over centre", the elongate strip then tends to move rapidly to the other relatively stable configuration.

Preferably the elongate strip includes (i) a relatively rigid first component constituting a first side wall and a first base portion, and (ii) a relatively rigid second component consisting a second side wall and a second base portion. Preferably the first and second base portions are hinged to each other at their end regions remote from the side walls. Preferably, in such a case, the elastically resilient component is arcuate and is hinged at its opposite end regions to the first and second components, preferably adjacent the junctions between the side wall and associated base portion, there being a hollow zone defined by the internal surfaces of the base portions and resilient component when the elongate strip is in the first configuration. If desired, the elastically resilient component may be an arcuate resilient spring member, for example an arcuate metal spring.

When the elongate strip is in the second configuration the hollow zone can be greatly reduced in size or can even be eliminated altogether, leaving just an arcuate slit.

One or more metal reinforcing cores may be present in any of the components of the elongate strip.

The side walls may be provided with projections intended, when the elongate strip is clamped on a flange, to increase resistance to removal of the strip from the flange.

The elongate strip may be provided with one or more sealing limb optionally provided with a slipcoat or flock.

The elongate strip may be provided within the aforementioned hollow zone with an adhesive which, when the elongate strip adopts the second configuration, assists in retaining the elongate strip in that configuration.

The elongate strip may be provided with engageable elements which, when the elongate strip adopts the second configuration, engage each other to assist in retaining the elongate strip in that configuration.

For a better understanding of the present invention and to show how the same may be carried into effect, reference will now be made, by way of example, to the accompanying drawings, in which:
Figure 1 is a cross-section through a first embodiment of an elongate strip in accordance with the present invention, in the first configuration;
Figure 1A is a cross-section through the same strip as in Figure 1, but in the second configuration;
Figure 2 is a cross-section through a second embodiment of an elongate strip in accordance with the present invention, in the first configuration;
Figure 2A is a cross-section through the same strip as in Figure 2, but in the second configuration;
Figure 3 is a cross-section through a third embodiment of elongate strip in accordance with the present invention, in the first configuration;
Figure 3A is a plan view of the reinforcing core components present in the strip of Figure 3;
Figure 4 is a cross-section through a fourth embodiment of elongate strip in accordance with the present invention, in the first configuration;
Figure 5 is a cross-section through a fifth embodiment of elongate strip in accordance with the present invention, in the first configuration;
Figure 6 is a cross-section through a sixth embodiment of elongate strip in accordance with the present invention, in the second configuration;
Figure 7 is a cross-section through a seventh embodiment of an elongate strip in accordance with the present invention, in the second configuration;
Figure 8 is a cross-section through an eighth embodiment of elongate strip in accordance with the present invention, in the second configuration;
Figure 9 is a cross-section through a ninth embodiment of elongate strip in accordance with the present invention, in a first configuration;
Figure 10 is a cross-section through a tenth embodiment of elongate strip in accordance with the present invention, in the first configuration;
Figure 10A is a cross-section through the same strip as in Figure 10, but in the second configuration;
Figure 11 is a cross-section through an eleventh embodiment of elongate strip in accordance with the present invention, in a first configuration;
Figure 12 is a cross-section through a twelfth embodiment of elongate strip in accordance with the present invention, in the first configuration; and
Figure 12A is a cross-section through the same strip as in Figure 12, but in the second configuration.

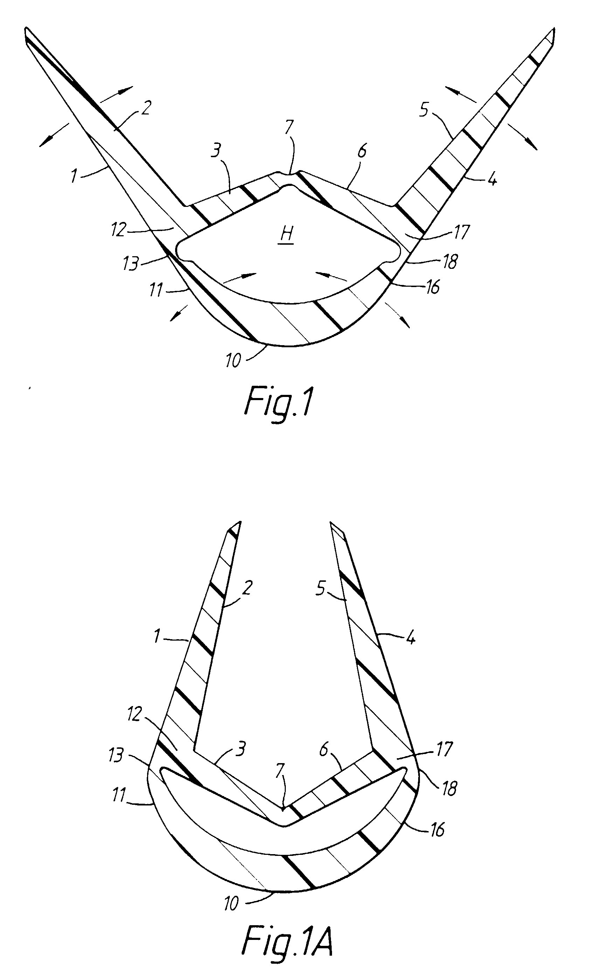

Referring first to Figures 1 and 1A, which illustrate the first embodiment of the elongate strip in accordance with the present invention, the strip includes a relatively rigid first component 1 made up of a first side wall 2 and a first base portion 3. The strip also includes a second component 4 which comprises a second side wall 5 and a second base portion 6. The first and second components 1 and 4 are arranged in a generally mirror-image disposition and are joined to each other, at that end of the base portions 3 and 6 remote from the first and second side wall 2 and 5, by a first hinge element 7 which takes the form of a line of weakness.

The strip also includes a third component 10 which is of a resiliently flexible nature and which is arcuate in cross-section, with one end region thereof 11 being located near a first junction 12 (being the junction of the first side wall 2 and first base portion 3) and being joined thereto by a second hinge element 13, which takes the form of a line of weakness.

The other, second end region 16 of the third component 10 is joined to a second junction 17 (being the junction between the second side wall 5 and second base portion 6) by means of a third hinge element 18, which takes the form of a line of weakness.

In the first configuration of the first embodiment of elongate strip, as shown in Figure 1, there is a large hollow zone H defined by the internal surfaces of the first and second base portions 3 and 6 and the arcuate third component 10, and the elongate strip will be extruded in this first configuration, in which the first and second side walls 2 and 5 are splayed apart, at an angle of approximately 80°.

In view of the relatively rigid nature of the first and second components 1 and 4 and in view of the relatively resiliently flexible nature of the arcuate component 10, if the free end regions of the first and second side walls 2 and 5 are moved towards each other, i.e. with the first component 1 pivoting clockwise about the first hinge element 7 and with the second component 4 pivoting anti-clockwise about the first hinge element 7, this causes the overall length of the arcuate third component 10, as measured rectilinearly from the first end region 11 to the second end region 16, to be increased, thus inducing considerable potential energy in the third component 10. This potential energy reaches a high level, possibly even a maximum, when the three hinge elements 13, 7 and 18 lie in the same plane, although any energy stored in the hinge areas may have influence on the disposition which has maximum potential energy. From this point, any further movement of the free end regions of the first and second side walls 2 and 5 causes the strip to move into a configuration of high instability with the consequence that, in order to relieve the strain in the system, by allowing the third component 10 to readopt a fully arcuate configuration, the first hinge element 7 is forced downwardly (as shown in Figure 1A) to near the internal surface of the arcuate third component 10, with the free end regions of the first and second side walls 2 and 5 becoming much closer to each other.

It will thus be appreciated that during the transformation from the first configuration to the second configuration described above, energy is introduced into the system until the point is reached, which is the point of maximum instability, where the three hinge elements 13, 7 and 18 are actually or nearly aligned, whereafter the elongate strip "flips" into a position of relative stability as illustrated in Figure 1A, with the first and second side walls 2 and 5 gripping anything which is situated between them as they move towards each other such as a flange (not shown).

It can be appreciated that an important component of the elongate strip shown in Figures 1 and 1A is the arcuate third component 10 which is of a resiliently flexible nature and which can be forced, temporarily, into a less arcuate configuration whilst accumulating potential energy which causes the arcuate third component 10 to want to resume its original configuration and which, once the system is passed its unstable "top dead centre" position of equilibrium, causes the first and second side walls 2 and 5 to move rapidly together.

In the embodiment illustrated in Figure 1A the first hinge element 7, when the strip is in the second configuration, is slightly spaced from the internal surface of the arcuate third component 10 but could, if desired, abut that surface.

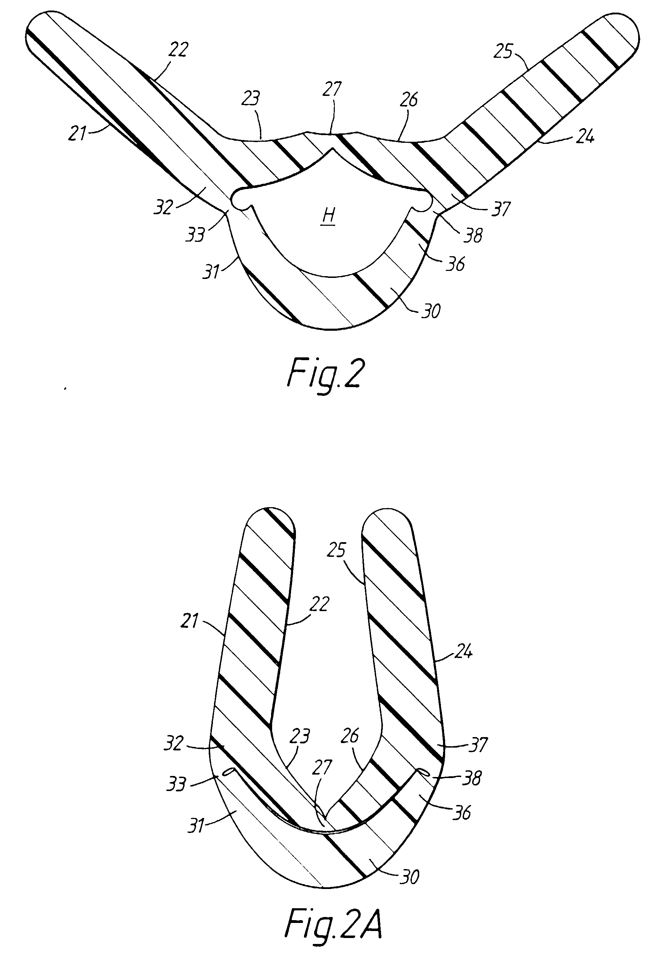

With regard to the second component of elongate strip illustrated in Figures 2 and 2A, in the first and second configurations, respectively, this strip operates, in terms of its moving between the first and second configurations, on principles substantially the same as those generally explained with regard to the strip of the first embodiment illustrated in Figures 1 and 1A.

In Figures 2 and 2A the strip has a relatively rigid first component 21 having a first side wall 22 and a first base portion 23 inclined thereto; as well as a relatively rigid second component 24 having a second side wall 25 and second base portion 26 inclined thereto.

Between the end regions of the first and second base portions 23 and 26 remote from the first and second side walls 22 and 25 is a first hinge element 27 formed by a relatively thin region of the material of the strip.

The strip of Figures 2 and 2A also includes a resiliently flexible arcuate third component 30 which at one end region thereof 31 is flexibly joined to a junction 32 of the first side wall 22 and first base portion 23, by a second hinge element 33 formed by a thinner region of the elongate strip.

Similarly, the arcuate third component 30 is joined at its second end region 36 to a junction 37 between the second side wall 25 and second base portion 26) by a third hinge component 38 constituted by a relatively thin portion of the elongate strip.

In use, the second embodiment illustrated in Figures 2 and 2A operates in substantially the same way as the first embodiment illustrated in Figures 1 and 1A in that as the free end regions of the first and second side walls 22 and 25 are moved together this causes the opposite end regions 31 and 36 of the third arcuate component 30 to be moved apart, thus inducing an increase in potential energy in component 30 until the three hinge elements 33, 27 and 38 are generally aligned whereafter any further movement causes the strip to want to move rapidly into the second configuration as illustrated in Figure 2A. It can be seen that in Figure 2 there is a large hollow zone H defined by the internal surfaces of the first and second base regions 23 and 26 and by the arcuate third component 30 but that those regions are so shaped that, when the strip of the second embodiment adopts the second configuration (as shown in Figure 2A), the internal surfaces of the first and second base portions 23 and 26 lie close to or against the internal surface of the arcuate third component 30, with the first and second side walls 22 and 25 being slightly inclined towards each other, rather than considerably splayed apart as shown in Figure 2.

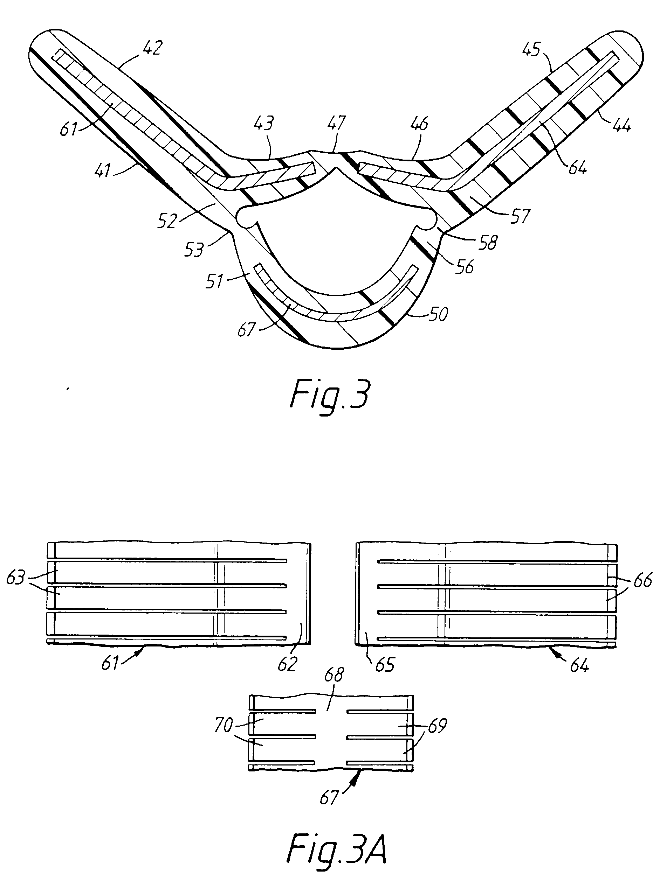

With regard to the third embodiment illustrated in Figures 3 and 3A, externally the strip appears somewhat similar to that illustrated in Figure 2 but in fact the strip of Figure 3 is provided with steel reinforcing in the form of three reinforcing cores.

For the avoidance of unnecessary repetition, it can be assumed that the components numbered 41 to 47, 50 to 53 and 56 to 58 in Figure 3 correspond, in terms of function and otherwise, to the components 21 to 27, 30 to 33 and 36 to 38, respectively, in Figure 2.

In the third embodiment illustrated in Figure 3, there is embedded in the first component 41 a first reinforcing core 61 which has a longitudinally-extending spine 62 from which project closely spaced ribs 63. Similarly, embedded in the second component 44 is a second reinforcing core 64 which has a longitudinally extending spine 65 from which project closely spaced ribs 66. The spines 62 and 65 of the first and second cores 61 and 64 are located in the first and second base portions 43 and 46 near the first hinge element 47.

The embodiment illustrated in Figure 3 also has embedded in the arcuate third component 50 a third reinforcing core 67 which has a central longitudinally-extending spine 68 from which project on one side a plurality of closely spaced ribs 69 and from which project the other side a plurality of closely spaced ribs 70, the ribs 69 being directed towards, but stopping short of, the third hinge element 58, and the ribs 70 being directed towards, but stopping short of, the second hinge element 53.

Figure 3A shows in plan view the reinforcing cores 61, 64 and 67 in their disposition as they appear in the strip of the third embodiment as illustrated in Figure 3 in the first configuration, with the first and second components 41 and 44 splayed apart.

The fourth embodiment as illustrated in Figure 4 of the drawings has much in common with the third component illustrated in Figure 3. To avoid unnecessary repetition, it is to be understood that the components in Figure 4 which are numbered 71 to 77, 80 to 83, 86 to 88, 91, 94 and 107 correspond, in terms of function and otherwise, to the components in Figure 3 which are numbered 41 to 47, 50 to 53, 56 to 58, 61, 64 and 67, respectively. There are three differences between the embodiment of Figure 4 and that of Figure 3. A first difference is that the first side wall 72 is provided with two inclined long projections 108 which, when the first and second side walls 72 and 75 are approximately parallel, will be directed towards the base of the channel partially defined by those side walls. The second difference is that the second side wall 74 is provided with four inclined short projections 109 which, when the first and second side walls 72 and 75 are approximately parallel to each other, are directed to the base of the channel partially defined by those opposing side walls. The purpose of the projections 108 and 109 is to enhance resistance to the removal of the elongate strip from a flange once the strip has been "snapped-on" to the flange (not shown).

The third difference between the fourth embodiment illustrated in Figure 4 and the third embodiment illustrated in Figure 3 is that the outer surface of the first side wall 72 is provided with patterning 110, the outer surface of the second side wall 75 is provided with patterning 111, and the outer surface of the arcuate third component 80 is provided with patterning 112, for decorative purposes.

The fifth embodiment illustrated in Figure 5 has much in common with the fourth embodiment illustrated in Figure 4 and those components in Figure 5 which are identical or substantially identical to the corresponding components in Figure 4 are identified by the same reference numerals, respectively.

The fifth embodiment illustrated in Figure 5 omits two features present in the embodiment of Figure 4, namely the patterning 111 on the external face of the second side wall 75 and also the patterning 112 extending all around the external surface of the arcuate third component 80.

Instead, the fifth embodiment of Figure 5 has a limited patterning 113 extending over only the left hand portion (as seen in Figure 5) of the external surface of the arcuate third component 80. Moreover, projecting from much of the remainder of the external surface of the third component 80 is a flexible sealing limb 114. Additionally, projecting from the generally free end region of the second side wall 75, on the external side thereof, is an arcuate sealing limb 115, which can be formed from an elastomeric compound, and which is provided on its outer surface (which is to contact a pane of glass) with a slip coat and/or flock 116.

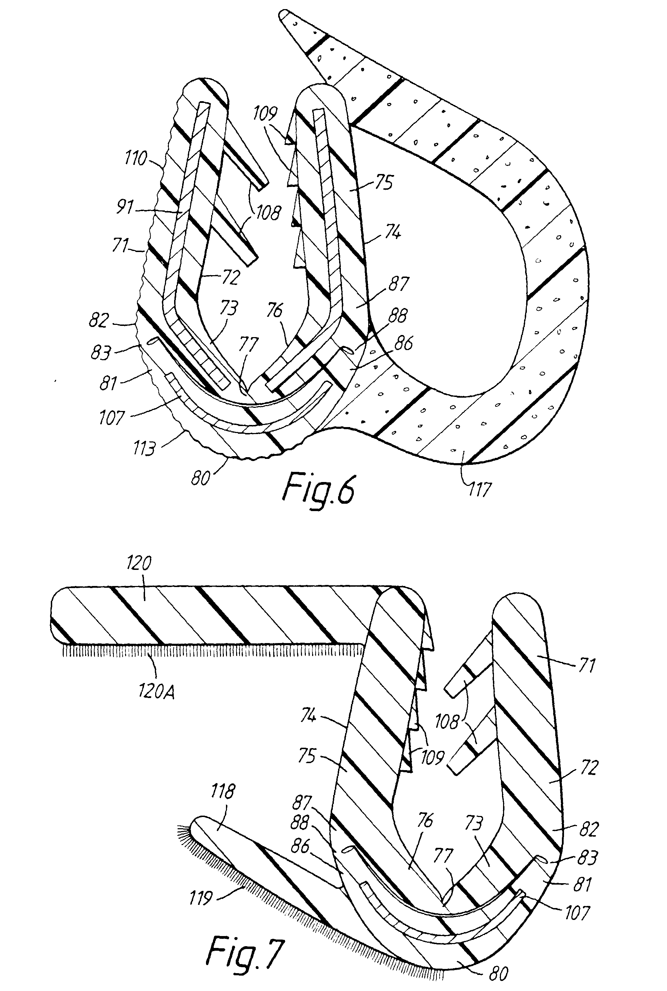

The sixth embodiment illustrated in Figure 6 has much in common with the fifth embodiment illustrated in Figure 5 although Figure 6 shows the sixth embodiment in the second, relatively closed, configuration. In the embodiment of Figure 6 there are absent the sealing limb 114 and sealing limb 115 with its associated slip coat and/or flock 116. Instead, linked to the arcuate third component 80 and to the free end region of the second side wall 75 is a curved sponge seal member 117 which defines its own hollow zone between itself and the rest of the second side wall 75. In all other respects the components present in the sixth embodiment in Figure 6 are substantially identical to the correspondingly numbered components in the fifth embodiment of Figure 5.

The seventh embodiment illustrated in Figure 7 of the drawings has much in common with, for example, the fourth embodiment illustrated in Figure 4, but with certain features omitted and other added. Those components of Figure 7 which are substantially identical to the corresponding components in Figure 4 are identified by identical reference numerals, respectively.

The seventh embodiment of Figure 7 does not have the patterning 110, 111 and 112 found in the embodiment of Figure 4 and nor does it have the first and second reinforcing cores 91 and 94, but it does have a core 107 equivalent to the third reinforcing core 107 of Figure 4.

Additionally, the strip shown in the embodiment in Figure 7 is provided with a sealing limb 118 projecting from the left hand portion (as seen in Figure 7) of the arcuate third component 80 and provided with flock and/or slip coat 119. Also, the strip shown in Figure 7 is provided at the free end region of the second side wall 75 with a further sealing limb 120 provided with its own layer of flock and/or slip coat 120A. In other respects the other components function like the corresponding components of the embodiment of Figure 4.

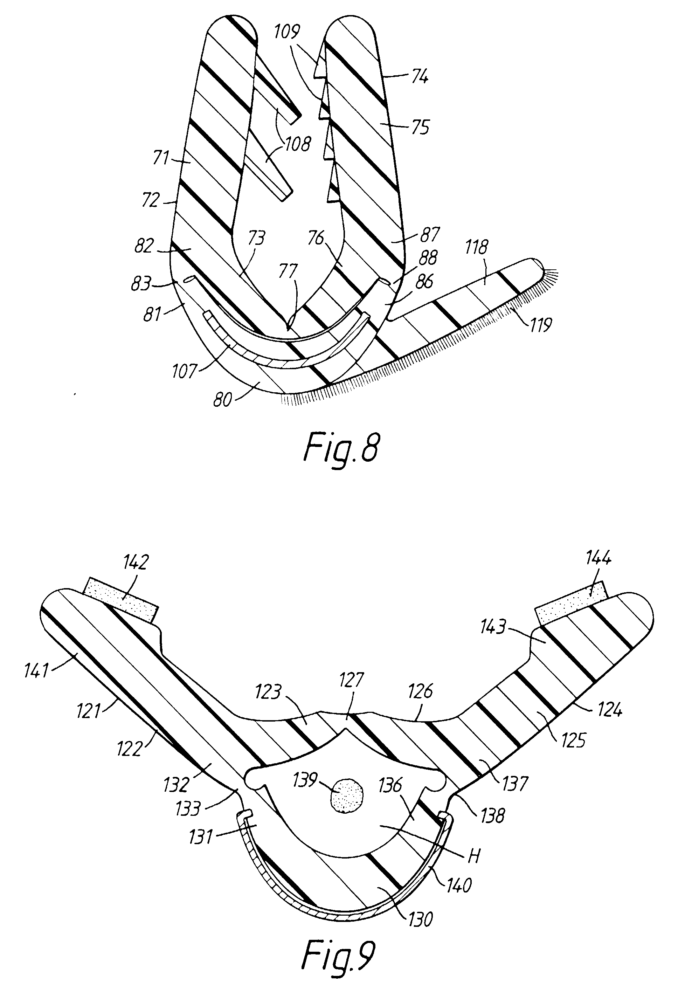

Visually, the eighth embodiment illustrated in Figure 8 is similar to the seventh embodiment illustrated in Figure 7, apart from the omission of the further sealing limb 120 projecting from the free end region of the second side wall 75.

The embodiments illustrated in Figures 7 and 8 can have the first and second components 71 and 74 formed from a relatively hard elastomeric material and can have the projections 108 and 109 as well as the seal 118 and, in the case of Figure 7, the seal 120 formed of a relatively soft elastomeric material.

The ninth embodiment illustrated in Figure 9 has much in common with the second component illustrated in Figure 2 and, to avoid unnecessary repetition, it is to be assumed that the components in Figure 9 which are numbered 121 to 127, 130 to 133 and 136 to 138 correspond, in terms of function and otherwise, to the components in Figure 2 which are numbered 21 to 27, 30 to 33 and 36 to 38, respectively.

There are, however, several additional features in the strip illustrated in Figure 9, compared to that illustrated in Figure 2. Firstly, in the hollow zone H (in the first configuration) defined by the internal surfaces of the first and second base portions 123 and 126 and by the internal surface of the arcuate third member 130 is a cylindrical strip of an adhesive 139 which can be co-extruded with the rest of the strip and which, when the elongate strip adopts the second configuration (not shown), causes adhesion between the internal surfaces of the first and second base portions 123 and 126, on the one hand, and the internal surface of the arcuate third component 130, on the other hand, to prevent any "snapping open" of the elongate strip.

Secondly, the outer surface of the arcuate third component 130 is provided with a decorative strip 140 which might be a multi-layer strip and which might, depending on the nature of the material(s) from which the strip 140 is formed, reinforce the spring action of the third component 130.

Thirdly, in the embodiment illustrated in Figure 9, the free end region 141 of the first side wall 122 is provided with a gripper limb 142 (which could take the form of a pressure sensitive tape), and the free end region 143 of the second side wall 125 is provided with a similar gripper limb 144, it being intended that the gripper limbs 142 and 144 will adhere to opposite sides of the flange when the elongate strip has "snapped on" to the flange upon adopting the second configuration.

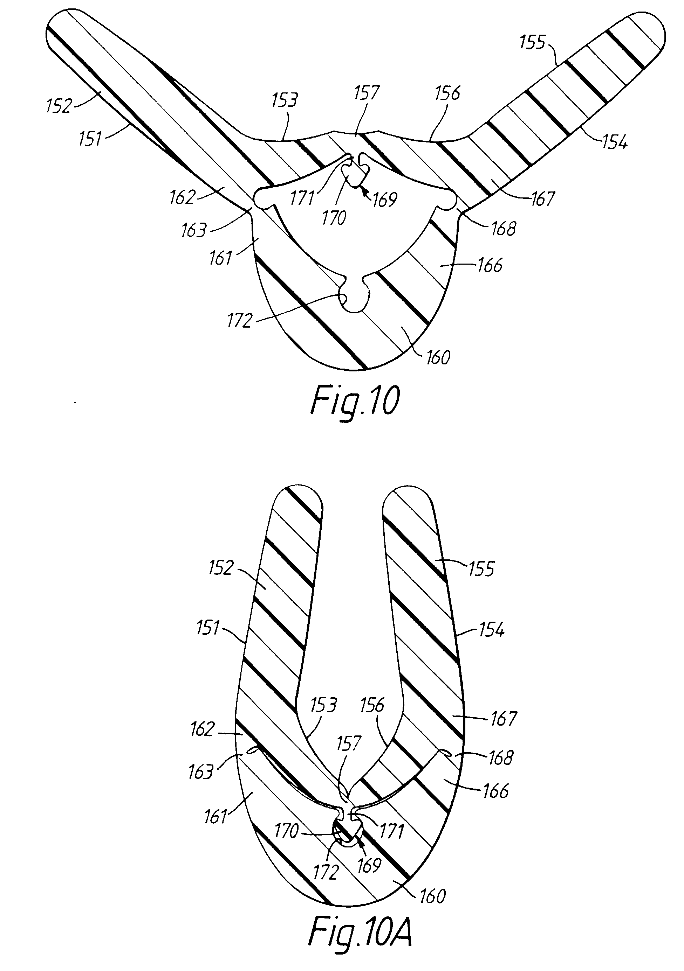

Finally, turning to the tenth embodiment illustrated in Figures 10 and 10A, this embodiment has much in common with the embodiment illustrated in Figure 2. To avoid unnecessary repetition, those components which in Figures 10 and 10A are numbered 151 to 157, 160 to 163 and 166 to 168 are to be understood as corresponding, in terms of function and otherwise, to the corresponding components which in Figure 2 are identified by the reference numerals 21 to 27, 30 to 33 and 36 to 38, respectively. A significant difference is that the embodiment of Figures 10 and 10A is provided with a barb 169 having a head 170 and a relatively narrow neck 171. The barb 169 projects from the first hinge element 157 into the hollow zone (in Figure 10) defined by the internal surfaces of the first and second base regions 153 and 156 and by the internal surface of the arcuate third component 160, the latter being provided at a central point with a recess 172 having a relatively narrow opening. When the elongate strip of the tenth embodiment is caused to move to the second configuration, as shown in Figure 10A, the barb 169 can be forced into the recess 172 and, because of the enlarged head 170, compared with the neck 171, the first hinge element 157 can be held secured adjacent the arcuate third component 160, thus increasing the resistance against the elongate strip of the tenth embodiment being caused to deform from its second configuration to its first configuration. In view of the provision of the barb 169 and recess 172, an advantage of the tenth embodiment is that the relatively harsh overset conditions required for the first to eighth embodiments are not required, as the retentive power of the system is enhanced by the mechanical locking on closing.

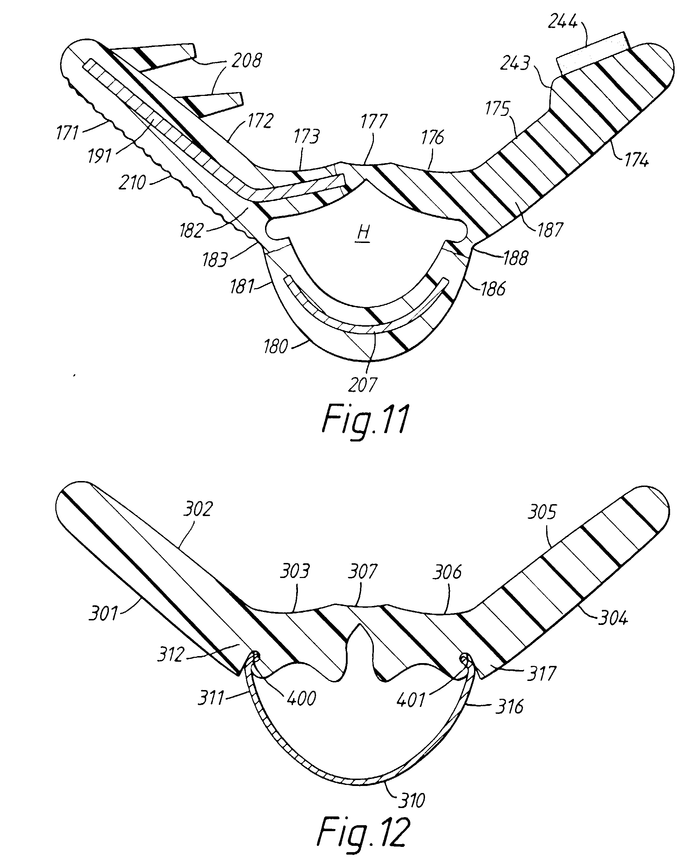

The eleventh embodiment of elongate strip, illustrated in Figure 11, can be regarded as a "hybrid" in that it takes numerous different features, many of which have already been mentioned in relation to other embodiments of the elongate strip of the present invention.

To avoid unnecessary repetition it should be noted that the components identified in Figure 11 by the reference numerals 171 to 177, 180 to 183 and 186 to 188 correspond, in terms of function and otherwise, to the corresponding components which in Figure 10 are identified by the reference numerals 151 to 157, 160 to 163 and 166 to 168, respectively.

In addition, the components or features identified in Figure 11 by the reference numerals 191, 207, 208, 210, 243 and 244 correspond respectively, in terms of function and otherwise, to the components or features numbered 91, 107, 108 and 110 in Figure 6 and numbered 143 and 144 in Figure 9.

Different parts of the elongate strip can be formed from different materials. For example, the first component 171, or at least a great majority of it, can be formed of an EPDM (ethylene propylene diene monomer) or PVC (poly(vinyl chloride)) plastics material which could have, for instance, a hardness of 70 Shore and which, in the illustrated embodiment, has the reinforcing core 191 and has a patterned outer surface 210. The limbs 208 carried by the side wall 172 could be formed of an EPDM plastics material having a hardness of 50 Shore.

The second component 174, the first hinge element 177, and the extreme right hand region of the first base portion 173 can be formed from a different plastics material, for example an EPDM or PVC plastics material having, for instance, a hardness of 90 Shore.

The third component 180 can be formed from a coloured plastics material, for example that known by the trade mark Santoprene, and can have embedded in it a flexible metal core 207.

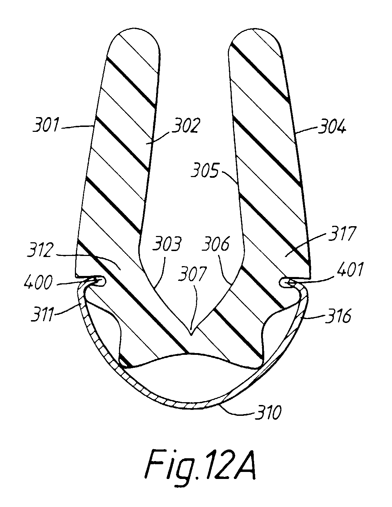

Regarding Figures 12 and 12A, the components numbered 301 to 307, 312 and 317 generally correspond to the components numbered 1 to 7, 12 and 17 in Figure 1. Also shown is an arcuate metal spring 310 which at one end region 311 is pivotally located in a groove 400 near the junction 312 and at its other end region 316 is pivotally located in a groove 401 near the junction 317. The spring 310 acts like the arcuate metal core member 67 in Figure 3, or the reinforcing core 107 in Figures 4 to 8, by providing resilient resistance to variation in its shape, thus tending to keep the elongate strip in its first configuration or in its second configuration. The spring 310 could be shaped, polished, patterned or encapsulated in clear or coloured polymeric material; or might even be a polymeric/elastomeric material alone such as CAB, hard PVC or hard rubber.

From the foregoing it will be appreciated that there is provision to accommodate considerable versatility in terms of the different components and features present in the elongate strip of the present invention.

From the foregoing it can be appreciated that different embodiments in accordance with the present invention can have much of the elongate strip formed from a mono unsupported 90 Shore EPDM but, equally, it could be formed from a semi-rigid coloured PVC of 90 Shore hardness with a pattern or other embossing, with or without nitrile/PVC flange gripping limbs, or even with a combination of pressure-sensitive tape and PVC limbs of 40 Shore hardness.

As shown in Figure 11, a further different style of elongate strip in accordance with the present invention could have a metal-reinforced 70 Shore EPDM or PVC component on one side, with a 90 Shore EPDM or PVC plastics material on the other side which could be optionally coloured and or patterned, and there could be a metal-reinforced Santoprene arcuate component.

Elongate strips in accordance with the present invention may be flexible or rigid in the linear direction, and can be provided with suitable additional features provided on their exterior by co-extrusion on the basic profile, depending on the requirements to be satisfied in use.

## Claims

1. An elongate strip formed by extrusion and intended for attachment to a flange present in a motor vehicle, the strip having a channel formed by a base (3,6) and two opposing side walls (2,5), the strip being deformable between a first configuration in which the side walls (2,5) are splayed apart and a second configuration in which the side walls (2,5) are relatively close to each other, energy being required to effect deformation of the strip out of its first configuration or second configuration, with energy thus being required to effect deformation of the strip from the first to the second configuration and vice versa, with the strip having stability when at rest in either of the first and second configurations;
characterised in that the strip includes an elastically resilient component which, when the strip is at rest in its first or second configuration, has relatively low potential energy but which, when the strip is forced out of its first or second configuration, has a relatively high potential energy, it being necessary to increase the potential energy of the elastically resilient component (10) during the first stages of deformation until an unstable condition is reached, with the result that, once the system is "over centre", the elongate strip then tends to move rapidly to the other relatively stable configuration.

2. An elongate strip according to claim 1, which includes (i) a relatively rigid first component (1) constituting a first side wall (2) and a first base portion (3), and (ii) a relatively rigid second component (4) consisting a second side wall (5) and a second base portion (6).

3. An elongate strip according to claim 2, wherein the first and second base portions (3,6) are hinged to each other at their end regions remote from the side walls (2,5).

4. An elongate strip according to claim 3, wherein the elastically resilient component (10) is arcuate and is hinged at its opposite end regions to the first and second components (1,4), there being a hollow zone (H) defined by the internal surfaces of the base portions (3,6) and resilient component (10) when the elongate strip is in the first configuration.

5. An elongate strip according to claim 4, wherein the elastically resilient component (10) is hinged to the first and second components (1,4) adjacent the junctions between the side wall (2,5) and associated base portion (3,6).

6. An elongate strip according to claim 4 or 5, in which, when the strip is in the second configuration, the hollow zone (H) can be greatly reduced in size compared to its size in the first configuration or can even be eliminated altogether, leaving just an arcuate slit.

7. An elongate strip according to any preceding claim, which includes one or more metal reinforcing cores (61) present in any of the components of the elongate strip.

8. An elongate strip according to any preceding claim, wherein at least one of the side walls is provided with projections (108, 109) intended, when the elongate strip is clamped on a flange, to increase resistance to removal of the strip from the flange.

9. An elongate strip according to any preceding claim, which is provided with one or more sealing limb (115) optionally provided with a slipcoat or flock (116).

10. An elongate strip according to claim 4, 5 or 6, or to claim 7, 8 or 9 when appendant to claim 4, which is provided within the aforementioned hollow zone with an adhesive (139) which, when the elongate strip adopts the second configuration, assists in retaining the elongate strip in that configuration.

11. An elongate strip according to claim 4, 5 or 6 or to claim 7, 8, 9 or 10 when appendant to claim 4, which is provided with engageable elements (169, 172) which, when the elongate strip adopts the second configuration, engage each other to assist in retaining the elongate strip in that configuration.

12. An elongate strip according to claim 11, wherein the engageable elements comprise a barb (170, 171) carried by part of the elongate device and a region defining a recess (172) capable of securely accommodating the barb when the elongate strip is in the second configuration.

13. An elongate strip according to any one of claims 1 to 6, wherein the elastically resilient component (10) is an arcuate resilient spring member (207, 210).

14. A motor vehicle which includes a flange to which is attached an elongate strip according to any preceding claim.

## Patentansprüche

1. Länglicher Streifen gebildet durch Extrudieren und vorgesehen zur Befestigung an einem Flansch, welcher sich in einem Motorfahrzeug befindet, bei welchem der Streifen einen von einer Basiswand (3, 6) und zwei einander gegenüberliegenden Seitenwänden (2, 5) gebildeten Kanal hat, wobei der Streifen zwischen einer ersten Konfiguration, bei welcher die Seitenwände (2, 5) voneinander gespreizt sind, und einer zweiten Konfiguration, bei welcher die Seitenwände (2, 5) relativ nahe beieinander liegen, deformierbar ist, wobei für eine Deformation des Streifens aus seiner ersten Konfiguration oder seiner zweiten Konfiguration Energie benötigt wird, wobei bei der so benötigten Energie, um die Deformation des Streifens aus der ersten in die zweite Konfiguration und umgekehrt zu bewirken, der Streifen Stabilität hat, wenn er sich in Ruhestellung entweder in der ersten oder der zweiten Konfiguration befindet;
**dadurch gekennzeichnet,** dass der Streifen einen federelastisches Bestandteil enthält, welcher, wenn der Streifen sich in Ruhestellung in seiner ersten oder zweiten Konfiguration befindet, relativ niedrige potentielle Energie hat, welcher jedoch, wenn der Streifen aus seiner ersten oder zweiten Konfiguration herausgezwungen ist, relativ hohe potentielle Energie hat, so dass es nötig ist, die potentielle Energie des federelastischen Bestandteils (10) während der ersten Stadien der Deformation zu vergrößern, bis ein instabiler Zustand erreicht ist, mit dem Ergebnis, dass, sobald das System "über die Mitte" ist, der längliche Streifen dann dazu neigt, sich schnell zu der anderen, relativ stabilen Konfiguration zu bewegen.

2. Länglicher Streifen gemäß Anspruch 1, welcher (i) einen relativ starren ersten Bestandteil (1), welcher eine erste Seitenwand (2) und einen ersten Basisabschnitt (3) bildet, und (ii) einen relativ starren zweiten Bauteil (4), welcher eine zweite Seitenwand (5) und einen zweiten Basisabschnitt (6) bildet, hat.

3. Länglicher Streifen gemäß Anspruch 2, bei welchem der erste und der zweite Basisabschnitt (3, 6) an ihren Endbereichen entfernt von den Seitenwänden (2, 5) aneinander angelenkt sind.

4. Länglicher Streifen gemäß Anspruch 3, bei welchem der federelastische Bestandteil (10) gekrümmt und an seinen einander gegenüberliegenden Endbereichen an den ersten und zweiten Bestandteilen (1, 4) angelenkt ist, wobei es eine hohle Zone (H) gibt, welche von den Innenflächen der Basisabschnitte (3, 6) und dem elastischen Bestandteil (10) gebildet ist, wenn sich der längliche Streifen in seiner ersten Konfiguration befindet.

5. Länglicher Streifen nach Anspruch 4, bei welchem das federelastische Bestandteil (10) an dem ersten und dem zweiten Bestandteil (1, 4) nahe den Verbindungen zwischen der Seitenwand (2, 5) und dem zugeordneten Basisabschnitt (3, 6) angelenkt ist.

6. Länglicher Streifen nach Anspruch 4 oder 5, bei welchem die hohle Zone (H) in ihrer Größe im Vergleich zu ihrer Größe in der ersten Konfiguration wesentlich verringert oder sogar gänzlich eliminiert werden kann, wobei lediglich ein gekrümmter Schlitz zurückbleibt, wenn sich der Streifen in der zweiten Konfiguration befindet.

7. Länglicher Streifen nach einem der vorhergehenden Ansprüche, welcher in einem beliebigen Bestandteil des länglichen Streifens einen oder mehrere Metallverstärkungskerne (61) enthält.

8. Länglicher Streifen nach einem der vorhergehenden Ansprüche, bei welchem mindestens eine der Seitenwände mit Vorsprüngen (108, 109) versehen ist, die den Widerstand beim Entfernen des Streifens von dem Flansch vergrößern sollen, wenn der längliche Streifen auf einen Flansch geklemmt ist.

9. Länglicher Streifen nach einem der vorhergehenden Ansprüche, welcher mit einem oder mehreren Dichtungslippen (115) versehen ist, welche wahlweise mit einem Gleitüberzug oder Flock (116) versehen sind.

10. Länglicher Streifen nach Anspruch 4, 5 oder 6, oder nach Anspruch 7, 8 oder 9, wenn abhängig von Anspruch 4, welcher innerhalb der vorher erwähnten hohlen Zone mit einem Haftmittel (139) versehen ist, welches - wenn der längliche Streifen die zweite Konfiguration annimmt - dabei hilft, den länglichen Streifen in dieser Konfiguration zu halten.

11. Länglicher Streifen nach Anspruch 4, 5 oder 6 oder nach Anspruch 7, 8, 9 oder 10, wenn abhängig von Anspruch 4, welcher mit Eingriffselementen (169, 172) versehen ist, welche - wenn der längliche Streifen die zweite Konfiguration annimmt - ineinander greifen, um beim Halten des länglichen Streifens in dieser Konfiguration zu helfen.

12. Länglicher Streifen nach Anspruch 11, bei welchem die Eingriffselemente einen Widerhaken (170, 171) aufweisen, welcher von einem Teil der länglichen Vorrichtung getragen ist, und einen Bereich, welcher einen Rücksprung (172) enthalten, welcher in der Lage ist, den Widerhaken sicher aufzunehmen, wenn sich der längliche Streifen in der zweiten Konfiguration befindet.

13. Länglicher Streifen nach einem der Ansprüche 1 bis 6, bei welchem das federelastische Bestandteil (10) ein gekrümmtes Federglied (207, 210) ist.

14. Motorfahrzeug mit einem Flansch, an welchem gemäß einem der vorhergehenden Ansprüche ein länglicher Streifen befestigt ist.

## Revendications

1. Ruban allongé formé par extrusion et destiné à être attaché sur une bride présente dans un véhicule automobile, le ruban ayant un canal formé par une base (3, 6) et par deux parois latérales opposées (2, 5), le ruban étant déformable entre une première configuration dans laquelle les parois latérales (2, 5) sont écartées et une deuxième configuration dans laquelle les parois latérales (2, 5) sont relativement proches l'une de l'autre, une énergie étant requise pour effectuer la déformation du ruban hors de sa première configuration, ou de sa deuxième configuration, une énergie étant donc requise pour effectuer la déformation du ruban depuis la première à la deuxième configuration et vice versa, et le ruban présentant une stabilité lorsqu'il se trouve au repos dans l'une ou l'autre de la première et de la deuxième configuration ;
caractérisé en ce que le ruban inclut un composant résilient élastique qui, quand le ruban est au repos dans sa première ou sa deuxième configuration, présente une énergie potentielle relativement basse mais qui, quand le ruban est forcé hors de sa première ou de sa deuxième configuration, présente une énergie potentielle relativement haute, de sorte qu'il est nécessaire d'augmenter l'énergie potentielle du composant résilient élastique (10) pendant les premières étapes de déformation jusqu'à atteindre une condition instable, avec pour résultat que, une fois que le système a dépassé une position de "point mort", le ruban allongé tend alors à se déplacer rapidement vers l'autre configuration relativement stable.

2. Ruban allongé selon la revendication 1, comprenant (i) un premier composant relativement rigide (1) constituant une première paroi latérale (2) et une première partie de base (3), et (ii) un deuxième composant relativement rigide (4) constituant une deuxième paroi latérale (5) et une deuxième partie de base (6).

3. Ruban allongé selon la revendication 2, dans lesquels la première et la deuxième partie de base (3, 6) sont articulées l'une à l'autre au niveau de leurs régions terminales éloignées des parois latérales (2, 5).

4. Ruban allongé selon la revendication 3, dans lequel le composant résilient élastique (10) est arqué, et est articulé au niveau de ses régions terminales opposées sur le premier et le deuxième composant (1, 4), de sorte qu'il existe une zone creuse (H) définie par les surfaces internes des parties de base (3, 6) et du composant résilient (10) quand le ruban allongé est dans la première configuration.

5. Ruban allongé selon la revendication 4, dans lequel le composant résilient élastique (10) est articulé au premier et au deuxième composant (1, 4) en position adjacente aux jonctions entre la paroi latérale (2, 5) et la partie de base associée (3, 6).

6. Ruban allongé selon l'une ou l'autre des revendications 4 et 5, dans lequel, quand le ruban est dans la deuxième configuration, la zone creuse (H) peut être fortement réduite quant à sa taille par comparaison à sa taille dans la première configuration, ou bien peut même être totalement éliminée, en laissant uniquement une fente arquée.

7. Ruban allongé selon l'une quelconque des revendications précédentes, comprenant un ou plusieurs noyaux de renfort en métal (61) présents dans l'un quelconque des composants du ruban allongé.

8. Ruban allongé selon l'une quelconque des revendications précédentes, dans lequel l'une au moins des parois latérales est pourvue de projections (108, 109) destinées, lorsque le ruban allongé est pincé sur une bride, à augmenter la résistance à l'enlèvement du ruban depuis la bride.

9. Ruban allongé selon l'une quelconque des revendications précédentes, pourvu d'une ou plusieurs lèvres d'étanchement (115), dotées en option d'un revêtement de glissement, ou d'un flocage (116).

10. Ruban allongé selon l'une des revendications 4, 5, ou 6, ou l'une des revendications 7, 8 ou 9 prise en dépendance de la revendication 4, pourvu d'un adhésif (139), à l'intérieur de la zone creuse précitée, qui, lorsque le ruban allongé adopte la deuxième configuration, assiste à retenir le ruban allongé dans cette configuration.

11. Ruban allongé selon l'une des revendications 4, 5 ou 6, ou l'une des revendications 7, 8, 9 ou 10 prise en dépendance de la revendication 4, pourvu d'éléments d'engagement (169, 172) qui, quand le ruban allongé adopte la deuxième configuration, s'engagent mutuellement pour assister à retenir le ruban allongé dans cette configuration.

12. Ruban allongé selon la revendication 11, dans lequel les éléments d'engagement comprennent une pointe (170, 171) portée par une partie du dispositif allongé, et une région définissant un creux (172) capable de recevoir assurément la pointe quand le ruban allongé est dans la deuxième configuration.

13. Ruban allongé selon l'une quelconque des revendications 1 à 6, dans lequel le composant résilient élastique (10) est un élément de ressort résilient arqué (207, 210).

14. Véhicule automobile comprenant une bride sur laquelle est attaché un ruban allongé selon l'une quelconque des revendications précédentes.
